# EUROPÄISCHE PATENTANMELDUNG

(11) **EP 4 112 211 A1**
(43) Veröffentlichungstag der Anmeldung: **04.01.2023**
(21) Anmeldenummer: 22172297.8
(22) Anmeldetag: 09.05.2022
(51) Int. Cl.: B23B 31/30, B23B 31/40

(54) **HYDRAULISCHE DEHNSPANNEINRICHTUNG**

(30) Priorität: 28.06.2021 DE 102021116607
(71) Anmelder: Schunk GmbH & Co. KG Spann- und Greiftechnik, 74348 Lauffen am Neckar (DE)
(72) Erfinder: Händel, Christian, 74357 Bönningheim (DE); Händel, Reinhard, 74357 Bönningheim (DE); Rost, Norman, 74336 Brackenheim (DE); Schinagel, Thomas, 74348 Lauffen am Neckar (DE); Schleusener, Tobias, 75031 Eppingen (DE)
(74) Vertreter: Paul & Albrecht Patentanwälte PartG mbB

(57) **Zusammenfassung**

Die vorliegende Erfindung betrifft eine hydraulische Dehnspanneinrichtung (1), insbesondere zum Fixieren eines Werkstücks oder eines Werkzeugs an einer Werkzeugmaschine, mit
einem eine Längsachse (X) definierenden Grundkörper (2), an dem ein Spannbereich (3) ausgebildet ist, wobei der Spannbereich (3)
eine Aufnahme (4) mit einer außenliegenden Spannfläche (5) für ein Bauteil und
eine mit einem Hydraulikmittel beaufschlagbare und radial innerhalb der Aufnahme (4) angeordnete Druckkammeranordnung (7) umfasst,

wobei zwischen der Aufnahme (4) und der Druckkammeranordnung (7) eine dünne Wandung (10) derart ausgebildet ist, dass sie durch Druckerhöhung in der Druckkammeranordnung (7) elastisch radial nach außen verformbar ist, um eine auf die Aufnahme (4) geschobenes Bauteil von innen kraftschlüssig zu fixieren.

## Beschreibung

### Hydraulische Dehnspanneinrichtung

Die vorliegende Erfindung betrifft gemäß einem ersten Aspekt eine hydraulische Dehnspanneinrichtung, insbesondere zum Fixieren eines Werkstücks oder eines Werkzeugs an einer Werkzeugmaschine, mit einem eine Längsachse definierenden Grundkörper, an dem ein Spannbereich ausgebildet ist, wobei der Spannbereich eine Aufnahme mit einer außenliegenden Spannfläche für ein Bauteil und eine mit einem Hydraulikmittel beaufschlagbare und radial innerhalb der Aufnahme angeordnete Druckkammeranordnung umfasst, wobei zwischen der Aufnahme und der Druckkammeranordnung eine dünne Wandung derart ausgebildet ist, dass sie durch Druckerhöhung in der Drucckammeranordnung elastisch radial nach außen verformbar ist, um ein auf die Aufnahme geschobenes Bauteil von innen kraftschlüssig zu fixieren.

Ferner betrifft die Erfindung gemäß einem zweiten Aspekt eine hydraulische Dehnspanneinrichtung, insbesondere zum Fixieren eines Werkstücks oder eines Werkzeugs an einer Werkzeugmaschine, mit einem eine Längsachse definierenden Grundkörper, an dem ein Spannbereich ausgebildet ist, wobei der Spannbereich eine Aufnahme mit einer innenliegenden Spannfläche für ein Bauteil und eine mit einem Hydraulikmittel beaufschlagbare und radial außerhalb der Aufnahme angeordnete Druckkammeranordnung umfasst, wobei zwischen der Aufnahme und der Druckkammeranordnung eine dünne Wandung derart ausgebildet ist, dass sie durch Druckerhöhung in der Druckkammeranordnung elastisch radial nach innen verformbar ist, um ein in die Aufnahme eingesetztes Bauteil von außen kraftschlüssig zu fixieren.

Außerdem betrifft die Erfindung gemäß einem dritten Aspekt eine hydraulische Dehnspanneinrichtung, insbesondere zum Fixieren eines Werkstücks oder eines Werkzeugs an einer Werkzeugmaschine, mit einem eine Längsachse definierenden Grundkörper, an dem ein Spannbereich ausgebildet ist, wobei der Spannbereich eine Aufnahme mit einer vorderen, stirnseitigen Spannfläche für ein Bauteil und eine mit einem Hydraulikmittel beaufschlagbare Druckkammeranordnung umfasst, welche axial hinter der Aufnahme ausgebildet ist, wobei zwischen der Aufnahme und der Druckkammeranordnung eine dünne Wandung derart ausgebildet ist, dass sie durch Druckerhöhung in der Druckkammeranordnung elastisch nach vorne verformbar ist, um ein auf die Aufnahme aufgesetztes Bauteil axial zu spannen.

Mit anderen Worten ist die Dehnspanneinrichtung gemäß dem ersten Aspekt als Spanndorn ausgebildet, welcher ein Bauteil radial von innen spannt. Demgegenüber ist die Dehnspanneinrichtung gemäß dem zweiten Aspekt als Spannfutter ausgebildet, bei dem ein Bauteil radial von außen gespannt wird. Die Dehnspanneinrichtung gemäß dem dritten Aspekt ist als Axialspanneinrichtung gestaltet.

Häufig werden derartige hydraulische Dehnspanneinrichtungen eingesetzt, um Werkzeuge oder Werkstücke an einer Maschinenspindel oder auf einem Maschinentisch einer Werkzeugmaschine zu fixieren. Die hydraulischen Dehnspanneinrichtungen umfassen gewöhnlich einen Grundkörper, der eine Längs- oder Spannachse definiert. An dem Grundkörper ist zumeist ein Spannbereich ausgebildet, welcher eine Aufnahme für ein Bauteil umfasst. Ferner umfasst der Spannbereich eine mit einem Hydraulikmittel beaufschlagbare Druckkammeranordnung, wobei zwischen der Aufnahme und der Drucckammeranordnung eine dünne Wandung ausgebildet ist. Diese ist durch Druckerhöhung in der Druckkammer elastisch radial nach außen oder nach innen verformbar, um ein Bauteil von innen oder von außen kraftschlüssig zu fixieren.

Derartige Dehnspanneinrichtungen können prinzipiell als Spanndorn zum innenseitigen Fixieren eines mit einer Öffnung versehenen Bauteils oder als Spannfutter zum außenseitigen Fixieren eines Bauteils an der meist zylindrischen Außenfläche ausgestaltet sein. Bei einem Spannfutter ist die Aufnahme dabei zumeist als eine im Wesentlichen zylindrische Bohrung ausgebildet, deren Innendurchmesser geringfügig größer ist als der Außendurchmesser des zu fixierenden Bauteils. Eine Druckammeranordnung ist dann radial außerhalb der Aufnahme angeordnet. Auf diese Weise wird gewährleistet, dass das Bauteil einfach in die Aufnahme eingesetzt werden kann und bereits eine geringe elastische Verformung der Wandung ausreicht, um das Bauteil kraftschlüssig in der Aufnahme von außen zu fixieren. Bei einem Spanndorn hingegen ist die Aufnahme zumeist in der Form eines Kreiszylinders ausgebildet, dessen Außendurchmesser geringfügig kleiner ist als der Innendurchmesser einer Öffnung des zu fixierenden Bauteils. Die Druckkammeranordnung ist dann radial innerhalb der Aufnahme angeordnet, so dass sich die dünne Wandung radial nach außen verformen kann, um ein aufgesetztes Bauteil zu spannen. Solche Dehnspanneinrichtungen, welche als Spanndorn oder Spannfutter ausgebildet sind, sind beispielsweise aus der DE 10 2009 049 582 B3 vorbekannt.

Ferner existieren Dehnspanneinrichtungen, die ein Werkstück in einer axialen Richtung spannen, bzw. positionieren können. Derartige Dehnspanneinrichtungen besitzen eine Aufnahme mit einer vorderen, stirnseitigen Spannfläche für ein Bauteil und eine hinter dieser Aufnahme angeordnete, mit einem Hydraulikmittel beaufschlagbare Druckkammeranordnung. Zwischen der Aufnahme und der Druckkammeranordnung ist eine dünne Wandung ausgebildet, welche durch Druckerhöhung in der Druckkammer elastisch verformbar ist, um ein auf die Aufnahme stirnseitig aufgesetztes Bauteil axial zu spannen bzw. zu positionieren, indem das Bauteil axial gegen ein Spannmittel gedrückt wird.

Grundsätzlich haben sich derartige hydraulische Dehnspanneinrichtungen bewährt. Jedoch tritt zuweilen das Problem auf, dass je nach Anwendungsgebiet bei der Werkstückbearbeitung sehr hohe Temperaturen entstehen können. Die Werkstückbearbeitung kann dabei spanende Fertigungsverfahren umfassen. Ebenso kann die Werkstückbearbeitung auch thermische Füge- und Trennverfahren oder Urformverfahren, insbesondere das Gießen von Metall, umfassen. Beispielsweise kann es vorkommen, dass ein zu fixierendes Werkstück mit einem Metall umgossen wird. Damit können aufgrund der Volumenexpansion des Hydraulikmittels hohe Kräfte auf die dünne Wandung zwischen der Druckkammer und der Aufnahme wirken, was zu einer Änderung der Spannkraft führen kann. Außerdem kann die Festigkeit des Werkstoffs des Grundkörpers überschritten werden, so dass die Spanneinrichtung versagen kann.

Aufgabe der vorliegenden Erfindung ist es daher, alternative hydraulische Dehnspanneinrichtungen bereitzustellen, welche insbesondere die vorgenannten Nachteile vermeiden und auch bei starken Temperaturschwankungen zuverlässig eine möglichst konstante Spannkraft erzeugen und eine Beschädigung der Spanneinrichtung vermeiden.

Diese Aufgabe ist bei einer hydraulischen Dehnspanneinrichtung der eingangs genannten Art gemäß dem ersten Aspekt dadurch gelöst, dass radial innerhalb der Druckkammeranordnung mindestens eine Hohlkammer ausgebildet ist, die von der Druckkammeranordnung durch eine Ausgleichsmembran getrennt ist, so dass sich die Ausgleichmembran in die Hohlkammer hinein verformen kann, wenn sich bei einem gespannten Bauteil die Temperatur des Hydraulikmittels erhöht und dieses expandiert.

Bei einer hydraulischen Dehnspanneinrichtung der eingangs genannten Art gemäß dem zweiten Aspekt ist diese Aufgabe dadurch gelöst, dass radial außerhalb der Druckkammeranordnung mindestens eine Hohlkammer ausgebildet ist, die von der Druckkammeranordnung durch eine Ausgleichsmembran getrennt ist, so dass sich die Ausgleichmembran in die Hohlkammer hinein verformen kann, wenn sich bei einem gespannten Bauteil die Temperatur des Hydraulikmittels erhöht und dieses expandiert.

Ferner ist die der Erfindung zugrundliegende Aufgabe bei einer hydraulischen Dehnspanneinrichtung der eingangs genannten Art gemäß dem dritten Aspekt dadurch gelöst, dass hinter der Druckkammeranordnung eine Hohlkammer ausgebildet ist, die von der Druckkammeranordnung durch eine Ausgleichsmembran getrennt wird, so dass sich die Ausgleichmembran in die Hohlkammer hinein verformen kann, wenn sich bei einem gespannten Bauteil die Temperatur des Hydraulikmittels erhöht und dieses expandiert.

Der Erfindung liegt die Überlegung zugrunde, eine Expansionsmöglichkeit für das Hydraulikmittel zu schaffen, wenn sich die Temperatur erhöht. Dazu ist auf der von der Spannfläche abgewandten Seite der Druckkammer eine Hohlkammer angeordnet. Die zwischen der Druckkammer und der Hohlkammer ausgebildete Ausgleichsmembran soll sich in Richtung der Hohlkammer verformen, wenn ein Bauteil gespannt ist und in Folge der äußeren Umstände die Temperatur der hydraulischen Dehnspanneinrichtung steigt und dadurch das Volumen des Hydraulikmittels zunimmt. Dadurch erhöht sich die Spannkraft, welche über die dünne Wandung auf das eingespannte Bauteil ausgeübt wird, deutlich geringer als bei einer Ausführung ohne eine solchen Hohlraum. Eine Beschädigung der hydraulischen Dehnspanneinrichtung in Folge eines stark steigenden Drucks in der Druckkammer kann damit vermieden werden. Mit anderen Worten erhöht sich durch die verformbare Ausgleichsmembran die Nachgiebigkeit des Hydrauliksystems.

Dabei ist die Hohlkammer bei einem Spanndorn radial innerhalb der Drucckammer angeordnet, wohingegen die Hohlkammer bei einem Spannfutter radial außerhalb der Druckkammer angeordnet ist. Bei einer Axialspanneinrichtung ist eine Spannfläche an einer vorderen Stirnseite eines Grundkörpers vorgesehen und hinter dieser eine mit einem Hydraulikmittel beaufschlagbare Druckkammeranordnung. Eine Hohlkammer ist dann hinter der Druckkammeranordnung, also auf der der Spannfläche abgewandten Seite der Druckkammeranordnung ausgebildet.

Bevorzugt ist die Ausgleichsmembran stärker ausgebildet als die dünne Wandung. Diese Ausgestaltung basiert auf der Überlegung, dass zum Spannen eines Bauteils die dünne Wandung eine erhöhte Verformbarkeit gegenüber der Ausgleichsmembran aufweisen soll. Denn beim Erhöhen des Drucks in der Druckkammer soll zunächst die dünne Wandung verformt werden, um ein aufgesetztes, bzw. eingeschobenes Bauteil zu spannen. Danach ist eine weitere Verformung der dünnen Wandung nicht mehr möglich. Somit soll sich bei einer weiteren Druckerhöhung erst dann die Ausgleichsmembran nennenswert verformen, um eine Expansion des Hydraulikmittels zu ermöglichen.

In weiterer Ausgestaltung kann die Ausgleichsmembran eine Dicke von mindestens 110%, insbesondere von mindestens 120%, und/oder von höchstens 300%, insbesondere von höchstens 200%, bevorzugt von 150 +/- 10% der Dicke der dünnen Wandung aufweisen. Ein solches Dickenverhältnis der Ausgleichsmembran bezogen auf die dünne Wandung hat sich als vorteilhaft herausgestellt, um einerseits eine hinreichende Spannkraft auf das zu spannende Bauteil aufzubringen und andererseits eine kontrollierte Volumenexpansion des Hydraulikmittels bei Temperaturänderungen unter Beibehaltung der Spannkraft zu ermöglichen.

Bei einer als Spanndorn ausgebildeten hydraulischen Dehnspanneinrichtung besitzt die außenliegende Spannfläche bevorzugt eine kreiszylindrische Form. In gleicher Weise kann einer als Spannfutter ausgebildeten hydraulischen Dehnspanneinrichtung die innenliegende Spannfläche eine kreiszylindrische Form aufweisen. Die Dicke der Ausgleichsmembran hängt dabei vom jeweiligen Durchmesser der Spannfläche ab. Bei einem Durchmesser im Bereich von 25 bis 50 mm weist die Ausgleichsmembran bevorzugt eine Dicke von mindestens 1,2 mm und/oder von höchstens 2,4 mm, besonders bevorzugt von 1,8 mm auf. Bei größeren Durchmessern kann sich die Dicke der Ausgleichsmembran, sowie die Dicke der dünnen Wandung zwischen Druckkammer und Spannfläche entsprechend erhöhen.

Gemäß einer bevorzugten Ausführungsform der Erfindung umfasst die Drucckammeranordnung mindestens eine, insbesondere genau eine ringförmig umlaufende Druckkammer. Ein derartiger Aufbau mit einer ringförmig umlaufenden Druckkammer führt zu einem einfachen Aufbau der erfindungsgemäßen hydraulischen Dehnspanneinrichtung.

Alternativ kann die Druckkammeranordnung über den Umfang verteilt mehrere, insbesondere genau drei Druckkammerabschnitte aufweisen, welche bevorzugt über einen Verbindungskanal fluidisch miteinander verbunden sind. Dieser Ausgestaltung der Druckkammeranordnung liegt die Überlegung zugrunde, über den Umfang verteilt mehrere Spannabschnitte zu schaffen. Mit anderen Worten soll sich die dünne Wandung über den Umfang verteilt in bestimmten Abschnitten besonders stark verformen, wodurch eine günstige Zentrierung des zu spannenden Bauteils erreicht wird.

Gemäß einer bevorzugten Ausgestaltung kann eine ringförmig umlaufende Hohlkammer vorgesehen sein. Dies führt zu einem einfachen Aufbau der hydraulischen Dehnspanneinrichtung. Alternativ können über den Umfang verteilt mehrere, insbesondere genau drei Hohlkammern vorgesehen sein.

Bevorzugt sind korrespondierend zu den Druckkammerabschnitten die gleiche Anzahl an Hohlkammern vorgesehen, wobei sich die Druckkammerabschnitte und die dazu korrespondierenden Hohlkammern zumindest im Wesentlichen, insbesondere genau über die gleichen Umfangswinkel um die Längsachse erstrecken. Somit ist jedem Druckkammerabschnitt eine korrespondierende Hohlkammer zugeordnet. Alternativ kann auch eine ringförmig umlaufende Hohlkammer vorgesehen sein. Das bedeutet, dass zwar über den Umfang verteilt mehrere Druckkammerabschnitte vorgesehen sind, diese jedoch an eine gemeinsame, ringförmig umlaufende Hohlkammer angrenzen.

In bevorzugter Ausgestaltung der Erfindung kann sich mindestens eine, insbesondere jede Hohlkammer über eine axiale Länge von mindestens 60%, insbesondere mindestens 80%, bevorzugt mindestens 90% der axialen Länge der Druckkammeranordnung und/oder über eine axiale Länge von höchstens 140%, insbesondere höchstens 120%, bevorzugt höchstens 110% der Länge der Druckkammeranordnung erstrecken. Eine solche Länge der Hohlkammer in Bezug auf die Druckkammeranordnung führt zu einer hinreichend flexiblen Ausgleichsmembran, welche durch Verformung dem Hydraulikmittel eine Expansionsmöglichkeit bietet.

Die Abmessungen der Hohlkammer in Bezug auf die Druckkammer, bzw. der Dicke der Ausgleichsmembran in Bezug auf die Dicke der dünnen Wandung sind voneinander abhängig. Bei einer geringen axialen Länge der Hohlkammer im Vergleich zur Druckkammer kann die Ausgleichsmembran eine dünnere Dicke aufweisen, um eine hinreichende Expansion des Hydraulikmittels bei einer ausreichenden Stabilität des Grundkörpers zu erzielen.

Die Ausgleichsmembran, welche die Hohlkammer von der Druckkammeranordnung trennt, kann prinzipiell entlang eines Kreiszylinders oder entlang eines Umfangsabschnitts eines Kreiszylinders verlaufen. Es ist aber auch denkbar, dass die Verformbarkeit der Ausgleichsmembran angepasst wird, indem diese eine unebene Kontur aufweist, beispielsweise als Wellenprofil in der Form eines Faltenbalgs ausgebildet ist.

Gemäß einer weiteren Ausführungsform der Erfindung kann die Druckkammeranordnung zwei axial voneinander beabstandete und ringförmig umlaufende Druckkammerabschnitte umfassen, welche bevorzugt über einen Verbindungskanal fluidisch miteinander verbunden sind. Durch eine solche Anordnung von zwei axial zueinander beabstandeten Druckkammerabschnitten wird eine besonders stabile Einspannung eines Bauteils realisiert. Demzufolge ist bevorzugt eine ringförmig umlaufende Hohlkammer vorgesehen, die sich zumindest teilweise axial über die beiden Druckkammerabschnitte erstreckt. Denkbar ist auch eine Anordnung, bei welcher korrespondierend zu den Druckkammerabschnitten zwei voneinander axial beabstandete Hohlkammern vorgesehen sind, die sich jeweils zumindest teilweise axial über den jeweiligen Druckkammerabschnitt erstrecken. Auch können über den Umfang verteilt mehrere Hohlkammern vorgesehen sein. Dadurch wird die Stabilität der Dehnspanneinrichtung erhöht und gleichzeitig eine Expansionsmöglichkeit für das Hydraulikmittel geschaffen.

Bevorzugt ist die Hohlkammer an ihren axialen Endbereichen abgerundet ausgebildet. Dieser Ausgestaltung liegt die Überlegung zugrunde, dass durch Abrundungen in den Endbereichen die Kerbwirkung verringert wird und somit die Lebensdauer der hydraulischen Dehnspanneinrichtung verlängert wird. Ferner kann die Druckkammeranordnung in ihren axialen Endbereichen einen gegenüber einem mittleren Bereich vergrößerten Querschnitt aufweisen. Hierdurch werden Abrundungen in den Endbereichen der Druckkammer ermöglicht und scharfe Querschnittsübergänge, welche Ausgangspunkt einer Rissbildung sein können, vermieden.

Um den Druck in der Druckkammeranordnung einstellen zu können, kann die Druckkammeranordnung in einen Hydraulikmittelzuführkanal münden, der an seiner von der Druckkammeranordnung fernen Seite durch eine Spannschraube nach außen verschlossen ist. In weiterer Ausgestaltung kann die Spannschrauben mit dem im Hydraulikmittelzuführkanal verschiebbar angeordneten Spannkolben wirkverbunden oder einteilig mit diesem ausgebildet sein, so dass der Spannkolben durch Drehen der Spannschraube unter Erhöhung des Drucks in der Druckkammeranordnung verschiebbar ist. Mit anderen Worten kann durch Drehen der Spannschraube der Spannkolben bewegt werden, um den Druck in der Druckkammeranordnung zu erhöhen.

Wenn die hydraulische Dehnspanneinrichtung als Spanndorn ausgebildet ist und eine außenliegende Spannfläche aufweist, kann der Hydraulikmittelzuführkanal eine zentrale Spannbohrung umfassen, in welcher der Spannkolben verschiebbar gelagert ist. Dadurch kann eine sehr kompakte Bauweise der Spanneinrichtung realisiert werden.

Um eine einfache Fertigung des Spanndorns zu gewährleisten, kann die Spannschraube in einem stirnseitig am Grundkörper befestigten Aufsatzstück untergebracht sein, wobei das Aufsatzstück insbesondere in den Grundkörper eingeschraubt ist. Mit anderen Worten ist die Spanneinrichtung zweiteilig ausgestaltet, wobei insbesondere das Aufsatzstück auf einfache Weise mittels konventionellem spanenden Fertigungsverfahren hergestellt werden kann. Die hydraulische Dehnspanneinrichtung kann auch einteilig ausgebildet sein, wobei der Bereich mit Ausgleichsmembran und Hohlkammer bevorzugt mittels eines generativen Fertigungsverfahrens hergestellt wird und ein weiterer Bereich bevorzugt konventionell, d.h. mit spanenden Fertigungsverfahren hergestellt wird.

Der Hydraulikmittelzuführkanal kann mit mindestens einer Entlüftungsöffnung fluidverbunden sein, wobei jede Entlüftungsöffnung bevorzugt mit einem Entlüftungsventil versehen ist. Dadurch kann eine Entlüftung der Druckkammeranordnung bzw. des Hydraulikmittelzuführkanals durchgeführt werden, indem das Entlüftungsventil gezielt geöffnet wird.

Bevorzugt ist die Hohlkammer als vollständig geschlossener Hohlraum im Grundkörper ausgebildet. Mit anderen Worten ist von außen kein Zugang zur Hohlkammer vorgesehen, so dass die Hohlkammer vollständig im Grundkörper eingeschlossen ist. Denkbar ist auch, dass die Hohlkammer über einen Verbindungskanal mit der Umgebung verbunden ist. Eine solche Ausgestaltung ist beispielsweise dann erforderlich, wenn bei der Nutzung eines generativen Fertigungsverfahrens zur Herstellung beispielsweise überschüssiges Pulver aus dem Hohlraum entfernt werden muss.

In weiterer Ausgestaltung kann der Grundkörper zumindest im Spannbereich einteilig ausgebildet sein und/oder zumindest teilweise mittels eines generativen Fertigungsverfahrens, insbesondere mittels selektivem Lasersinters hergestellt sein. Ein derartiges Herstellungsverfahren ermöglicht die Fertigung nahezu beliebiger Geometrien und gestattet insbesondere eine einfache Herstellung der Hohlkammer. Prinzipiell ist allerdings auch eine vollständige Fertigung des Grundkörpers mittels konventioneller spanender Fertigungsverfahren oder thermischer Fügeverfahren denkbar. Alternativ ist es auch denkbar, den Grundkörper zumindest im Spannbereich mehrteilig auszubilden, wobei eine Dehnhülse vorgesehen sein kann. Die Dehnhülse kann gegenüber dem restlichen Grundkörper durch O-Ringe abgedichtet und/oder mit diesem verschraubt und/oder verlötet werden.

Zum Anbringen an einer Maschine kann die erfindungsgemäße Dehnspanneinrichtung eine Maschinenschnittstelle aufweisen, die bevorzugt an einem axialen Endbereich des Grundkörpers ausgebildet ist. Die Maschinenschnittstelle kann einen Ringflansch und einen Befestigungskonus umfassen. Dabei kann die Maschinenschnittstelle als normierter Hohlschaftkegel (HSK) nach DIN 69893-1 oder als Steilkegel (SK) ausgebildet sein. Dadurch wird eine einfache Anbringung der erfindungsgemäßen hydraulischen Dehnspanneinrichtung an einer Werkzeugmaschine ermöglicht. Prinzipiell kann die hydraulische Dehnspanneinrichtung auch andere Schnittstellen umfassen.

Weitere Merkmale und Vorteile der vorliegenden Erfindung werden anhand der nachfolgenden Beschreibung der erfindungsgemäßen hydraulischen Dehnspanneinrichtung unter Bezugnahme auf die beiliegende Zeichnung deutlich. In der Zeichnung zeigen:
- Figur 1: eine erste Ausführungsform einer erfindungsgemäßen hydraulischen Dehnspanneinrichtung in einer Längsschnittansicht;
- Figur 2: eine zweite Ausführungsform einer erfindungsgemäßen hydraulischen Dehnspanneinrichtung in einer schematischen Längsschnittansicht;
- Figur 3: die hydraulische Dehnspanneinrichtung aus Figur 2 in einer schematischen Querschnittansicht;
- Figur 4: eine dritte Ausführungsform einer erfindungsgemäßen hydraulischen Dehnspanneinrichtung in einer schematischen Längsschnittansicht;
- Figur 5: eine vierte Ausführungsform einer erfindungsgemäßen hydraulischen Dehnspanneinrichtung in einer schematischen Längsschnittansicht; und
- Figur 6: eine fünfte Ausführungsform einer erfindungsgemäßen hydraulischen Dehnspanneinrichtung in einer schematischen Längsschnittansicht.

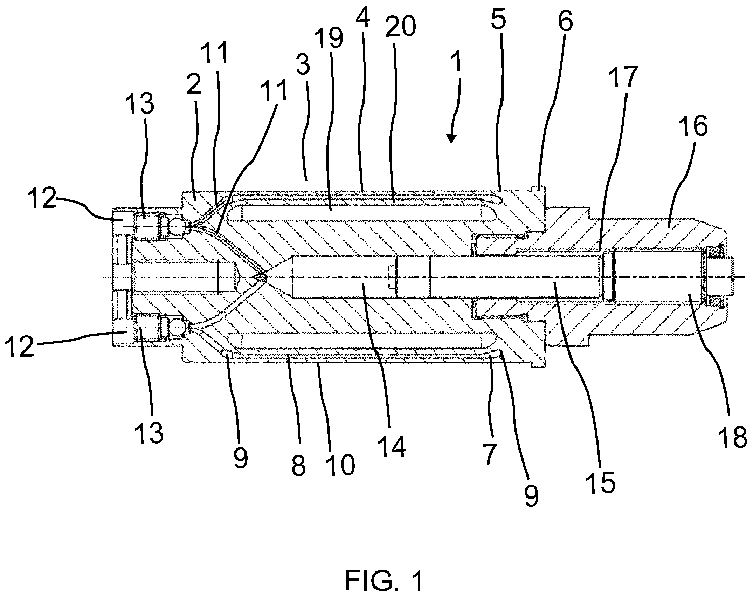

Die Figur 1 zeigt eine als Hydrodehn-Spanndorn 1 ausgebildete hydraulische Dehnspanneinrichtung zum Fixieren eines Werkstücks an einer Werkzeugmaschine gemäß der vorliegenden Erfindung.

Der Spanndorn 1 umfasst einen Grundkörper 2, der eine zentrale Längsachse X definiert. An dem Grundkörper 2 ist ein Spannbereich 3 ausgebildet, welcher eine Aufnahme 4 mit einer außenliegenden, kreiszylindrischen Spannfläche 5 für ein Bauteil umfasst. Auf der in Figur 1 rechten Seite des Grundkörpers 2 ist die Spannfläche 5 durch einen ringförmig umlaufenden Anschlagvorsprung 6 begrenzt. Zum in der Figur 1 linken Endbereich der Spannfläche 5 hin verjüngt sich der Durchmesser des Grundkörpers 2 geringfügig, um ein problemloses Aufschieben eines Bauteils zu ermöglichen.

Radial innerhalb der Aufnahme 4 ist eine mit einem Hydraulikmittel beaufschlagbare Druckkammeranordnung 7 ausgebildet. Konkret umfasst die Druckkammeranordnung 7 eine ringförmig umlaufende Druckkammer 8, die sich über eine axiale Länge von etwa 80% der Länge der außenliegenden Spannfläche 5 erstreckt. In ihren axialen Endbereichen 9 weist die Druckkammer 8 gegenüber ihrem mittleren Bereich einen vergrößerten Querschnitt auf. Ferner ist die Druckkammer 8 in ihren Endbereichen 9 abgerundet ausgebildet.

Zwischen der Druckkammer 8 und der außenliegenden Spannfläche 5 ist eine dünne Wandung 10 ausgebildet, welche vorliegend eine Dicke von etwa 1,2 mm aufweist. Die dünne Wandung 10 ist dabei durch eine Druckerhöhung in der Druckkammer 8 elastisch radial nach außen verformbar, um ein auf die Aufnahme 4 geschobenes Bauteil von innen kraftschlüssig zu fixieren.

An ihrem in der Figur 1 linken axialen Endbereich 9 mündet die Druckkammer 8 in insgesamt vier Hydraulikmittelzuführkanäle 11, welche gleichmäßig über den Umfang verteilt sind. Diese verlaufen zunächst radial schräg nach innen und münden wiederum in vier über den Umfang verteilte Entlüftungsöffnungen 12, die jeweils mit einem Entlüftungsventil 13 versehen sind. Im Bereich der Entlüftungsöffnungen 12 biegen die Hydraulikmittelzuführkanäle 11 in die entgegengesetzte Richtung, d.h. in der Figur 1 dargestellt nach rechts und radial nach innen zur Längsachse X hin ab. Radial innen münden die Hydraulikmittelzuführkanäle 11 in eine zentrale Spannbohrung 14, in welcher ein Spannkolben 15 verschiebbar gelagert ist.

In die in der Figur 1 rechts dargestellte Stirnseite des Grundkörpers 2 ist ein Aufsatzstück 16 eingeschraubt. Dieses weist eine zentrale Durchgangsbohrung auf, in welche der Spannkolben 15 ragt und in welche eine Spannschraube 18 eingeschraubt ist. Die Spannschraube 18 liegt stirnseitig flächig an dem Spannkolben 15 an, so dass der Spannkolben 15 durch Drehen der Spannschraube 18 unter Erhöhung des Drucks in der Druckkammer 8 verschiebbar ist.

Radial innerhalb der Druckkammer 8 ist eine ringförmig umlaufende Hohlkammer 19 ausgebildet. Diese ist als vollständig geschlossener Hohlraum im Grundkörper 2 ausgebildet und erstreckt sich im Wesentlichen über die gleiche axiale Länge wie die Druckkammer 8. An ihren Endbereichen ist die Hohlkammer 19 abgerundet ausgebildet, um die Kerbwirkung zu verringern.

Von der Druckkammer 8 ist die Hohlkammer 19 durch eine Ausgleichsmembran 20 getrennt. Die Ausgleichsmembran 20 weist über ihre axiale Länge eine im Wesentlichen gleiche Dicke von etwa 1,8 mm auf, was somit etwa 150% der Dicke der dünnen Wandung 10 zwischen der Druckkammer 8 und der außenliegenden Spannfläche 5 entspricht.

Soll ein Bauteil auf den Hydrodehnspanndorn 1 gespannt werden, so wird zunächst das mit einer entsprechenden Bohrung versehene Bauteil mit Spiel auf die Aufnahme 4 aufgeschoben. Durch Eindrehen der Spannschraube 18 wird der Spannkolben 15 in der Figur 1 nach links bewegt, wodurch der Druck des Hydraulikmittels in der Druckkammer 8 erhöht wird. In Folge dessen verformt sich die dünne Wandung 10 radial nach außen und fixiert das aufgeschobene Bauteil kraftschlüssig. Dadurch, dass die Ausgleichsmembran mit einer Dicke von 1,8 mm stärker ausgebildet ist, als die dünne Wandung 10 mit einer Dicke von 1,2 mm, verformt sich bevorzugt die dünne Wandung 10 radial nach außen, während die Ausgleichsmembran 20 zunächst allenfalls einer geringen Verformung unterzogen wird.

Treten nun bei der Bearbeitung des Bauteils Temperaturerhöhungen auf, so führt dies zu einer Expansion des Hydraulikmittels. Da eine weitere Verformung der dünnen Wandung 10 radial nach außen aufgrund der Wechselwirkung mit dem gespannten Bauteil nicht möglich ist, verformt sich in diesem Fall die Ausgleichsmembran 20 radial nach innen und ermöglicht so eine Volumenvergrößerung des Hydraulikmittels, so dass die auf das gespannte Bauteil wirkende Spannkraft im Wesentlichen konstant bleibt und keine Gefahr einer mechanischen Überbeanspruchung für den Grundkörper 2 besteht.

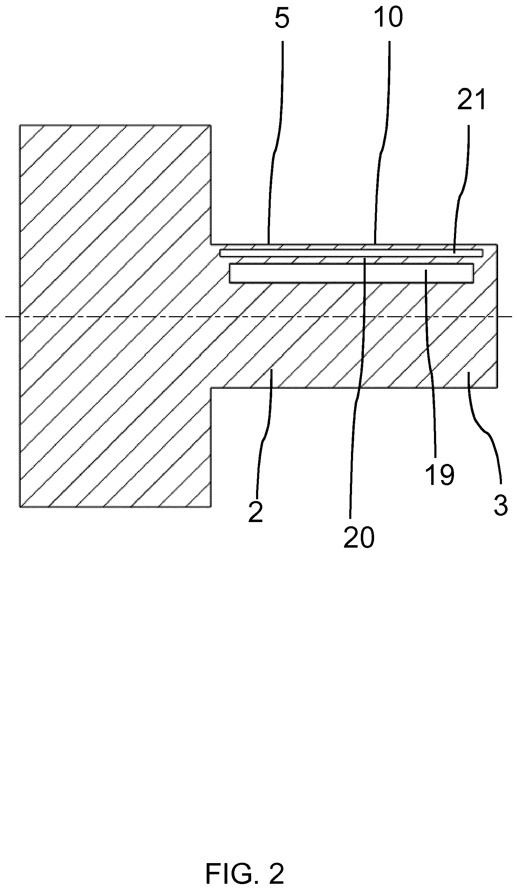

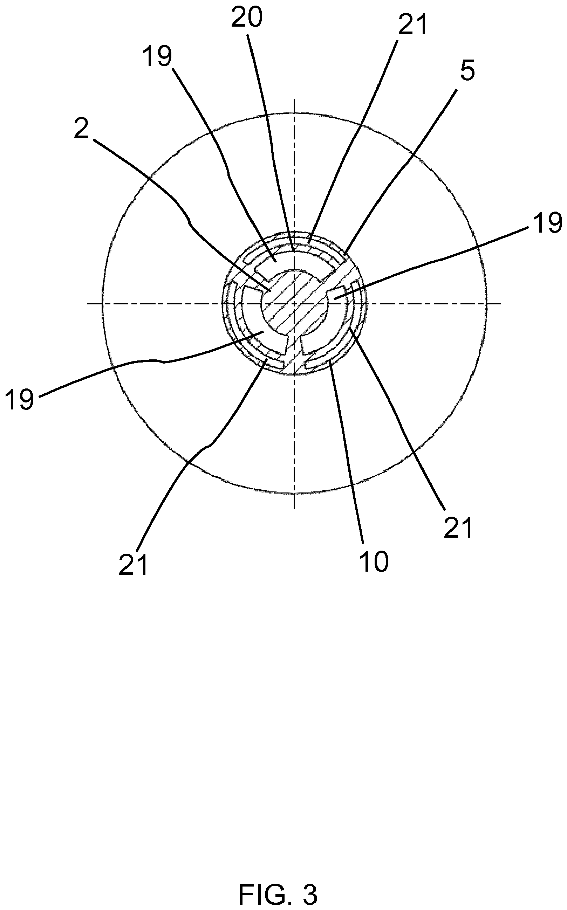

Die Figuren 2 und 3 zeigen eine weitere erfindungsgemäße Ausführungsform eines Hydrodehn- Spanndorns 1. Gegenüber der in der Figur 1 dargestellten Ausführungsform weist der Spanndorn 1 der Figuren 2 und 3 keine ringförmig umlaufende Druckkammer 8 auf, sondern drei über den Umfang verteilt angeordnete Druckkammerabschnitte 21. Zwischen jedem Druckkammerabschnitt 21 und der außenliegenden Spannfläche 5 der Aufnahme 4 ist in gleicher Weise wie bei dem bereits beschriebenen Hydrodehnspanndorn 1 der Figur 1 eine dünne Wandung ausgebildet, welche sich radial nach außen verformt, wenn der Druck in den Druckkammerabschnitten 21, die miteinander fluidverbunden sind, erhöht wird.

Korrespondierend zu der Anzahl der Druckkammerabschnitte 21 sind über den Umfang verteilt drei Hohlkammern 19 vorgesehen, die radial innerhalb der Druckkammerabschnitte 19 liegen und sich jeweils über den gleichen Umfangswinkel erstrecken wie die jeweiligen Druckkammerabschnitte 21.

In gleicher Weise wie bei der in der Figur 1 dargestellten hydraulischen Dehnspanneinrichtung ist zwischen der jeweiligen Hohlkammer 19 und dem korrespondierenden, radial außenliegenden Druckkammerabschnitt 21 eine Ausgleichsmembran 20 ausgebildet, so dass das Hydraulikmittel bei einer Temperaturerhöhung durch die Verformung der Ausgleichsmembran 20 in die Hohlkammer 19 hinein expandieren kann.

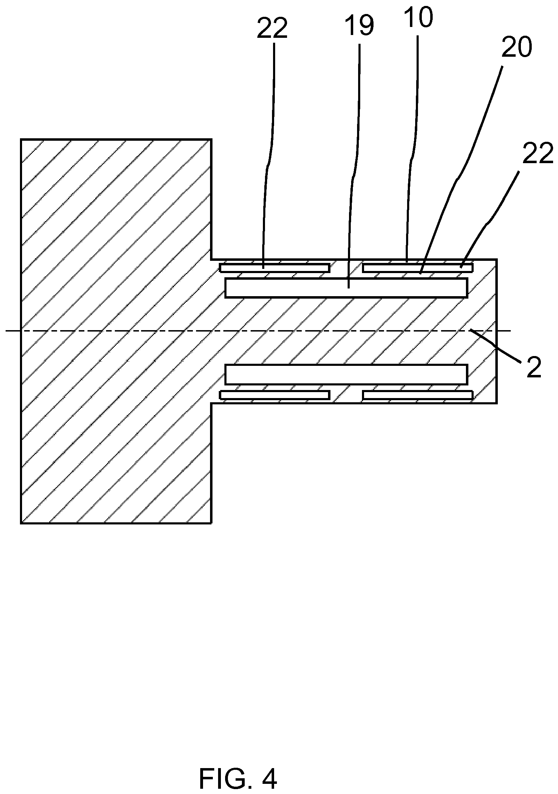

Die Figur 4 zeigt eine weitere Ausführungsform eines Hydrodehnspanndorns 1 gemäß der vorliegenden Erfindung. Dieser unterscheidet sich von dem Hydrodehnspanndorn 1 der Figur 1 dadurch, dass die Druckkammeranordnung 7 zwei axial voneinander beabstandete und ringförmig umlaufende Druckkammerabschnitte 22 umfasst, welche über einen nicht dargestellten Verbindungskanal fluidisch miteinander verbunden sind. Ferner ist eine gemeinsame ringförmig umlaufende Hohlkammer 19 vorgesehen, die sich axial nahezu über die gesamte axiale Länge der beiden Druckkammerabschnitte 22 erstreckt.

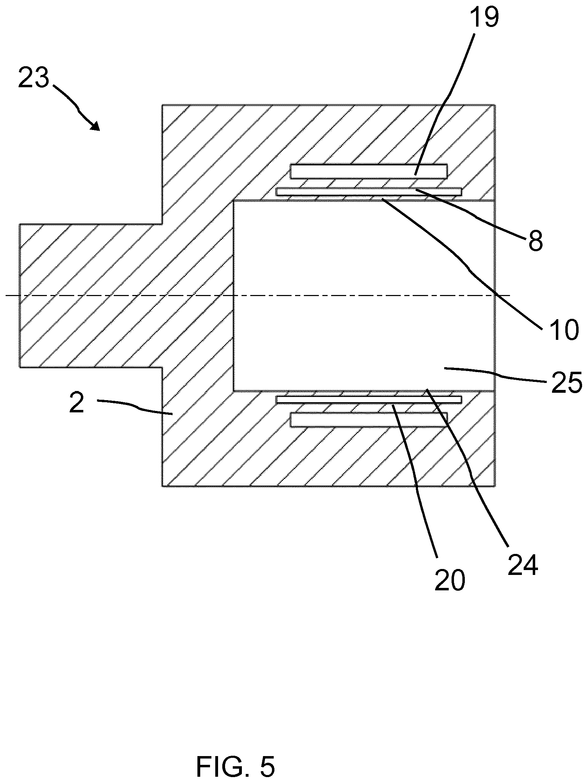

Die Figur 5 zeigt eine als Hydro- Dehnspannfutter 23 ausgebildete hydraulische Dehnspanneinrichtung gemäß der vorliegenden Erfindung. Das Hydro-Dehnspannfutter 23 besitzt einen eine Längsachse X definierenden Grundkörper 2 mit einer linksseitig in der Figur 5 schematisch dargestellten Maschinenschnittstelle. Die rechts in der Figur 5 gezeigte Aufnahme 4 umfasst dabei im Gegensatz zu den Spanndornen der Figuren 1 bis 4 keine außenliegende Spannfläche 5, sondern eine innenliegende Spannfläche 24, welche durch eine kreiszylindrische Aufnahmebohrung 25 gebildet wird. Radial außerhalb der Aufnahmebohrung 25 ist eine Druckkammeranordnung 7 ausgebildet, welche vorliegend eine ringförmig umlaufende Druckkammer 8 umfasst. Zwischen der Druckkammer 8 und der innenliegenden Spannfläche 24 ist eine dünne Wandung 10 ausgebildet, welche sich durch Druckerhöhung in der Druckkammer 8 elastisch radial nach innen verformt, um ein in die Aufnahmebohrung 25 eingesetztes Bauteil von außen kraftschlüssig zu fixieren. Radial außerhalb der Druckkammer 8 ist eine Hohlkammer 19 ringförmig umlaufend ausgebildet, die wiederum von der Druckkammer 8 durch eine Ausgleichsmembran 20 getrennt ist.

In gleicher Weise wie bei den zuvor bereits beschriebenen Ausführungsbeispielen kann sich die Ausgleichsmembran 20 in die Hohlkammer 19 hinein verformen, wenn ein Bauteil in der Aufnahmebohrung 25 eingespannt ist und sich das Hydraulikmittel aufgrund einer Temperaturerhöhung ausdehnt.

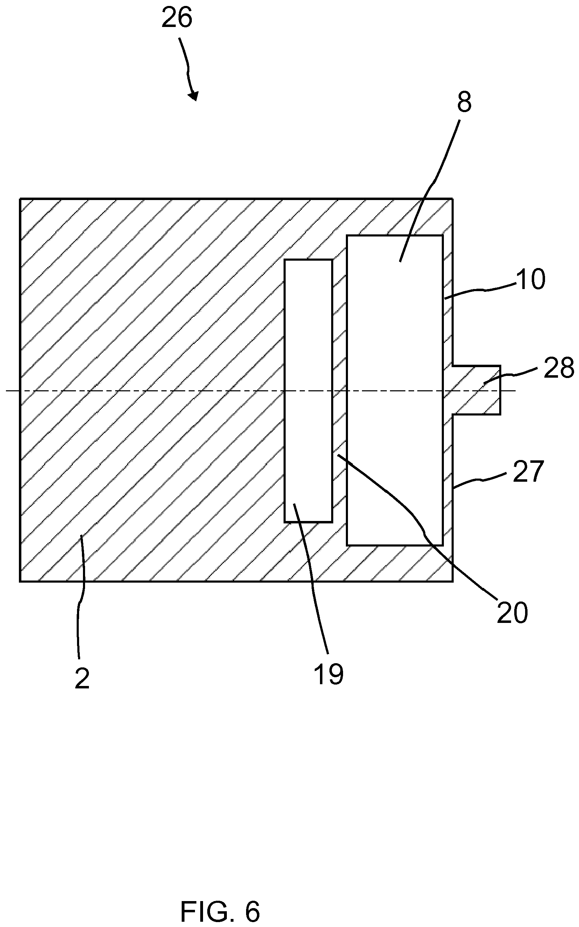

In der Figur 6 ist eine Axial-Spanneinrichtung gemäß der vorliegenden Erfindung dargestellt. Diese umfasst ebenfalls einen eine Längsachse X definierenden Grundkörper 2, an dem ein Spannbereich 3 ausgebildet ist. Konkret umfasst der Spannbereich 3 eine Aufnahme 4 mit einer vorderen, stirnseitigen Spannfläche 27 für ein Bauteil. Von dieser Spannfläche 27 ragt ein Positioniervorsprung 28 nach vorne ab.

Hinter der stirnseitigen Spannfläche 27 ist eine mit einem Hydraulikmittel beaufschlagbare Druckkammeranordnung 7 ausgebildet, welche vorliegend eine Druckkammer 8 mit einem kreisförmigen Querschnitt umfasst. Zwischen der stirnseitigen Spannfläche 27 und der Druckkammer 8 ist eine dünne Wandung 10 derart ausgebildet, dass sie durch eine Druckerhöhung in der Druckkammer 8 elastisch nach vorne verformbar ist, um ein auf die Aufnahme 4 aufgesetztes Bauteil axial zu spannen oder zu positionieren. Hinter der Druckkammer 8 ist wiederum eine Hohlkammer 19 ausgebildet, die von der Druckkammer 8 durch eine Ausgleichsmembran 20 getrennt ist.

Wenn mittels der Axial-Spanneinrichtung 26 ein Bauteil gespannt ist und sich die Temperatur insbesondere des Hydraulikmittels ändert, so kann das Hydraulikmittel durch die Verformung der Ausgleichsmembran 20 nach hinten in die Hohlkammer 19 hinein expandieren. Auf diese Weise wird ein Druckanstieg, welcher zumindest lokal zu einer Überschreitung der Festigkeit des Grundkörpers 2 führen kann, sicher verhindert.

### Bezugszeichenliste

| | | | |
|---|---|---|---|
| 1 | Hydro-Dehnspanndorn | X | Längsachse |
| 2 | Grundkörper | | |
| 3 | Spannbereich | | |
| 4 | Aufnahme | | |
| 5 | außenliegende Spannfläche | | |
| 6 | Anschlagvorsprung | | |
| 7 | Druckkammeranordnung | | |
| 8 | Druckkammer | | |
| 9 | axialer Endbereich | | |
| 10 | dünne Wandung | | |
| 11 | Hydraulikmittelzuführkanal | | |
| 12 | Entlüftungsöffnung | | |
| 13 | Entlüftungsventil | | |
| 14 | zentrale Spannbohrung | | |
| 15 | Spannkolben | | |
| 16 | Aufsatzstück | | |
| 17 | zentrale Durchgangsbohrung | | |
| 18 | Spannschraube | | |
| 19 | Hohlkammer | | |
| 20 | Ausgleichsmembran | | |
| 21 | Druckkammerabschnitt | | |
| 22 | Druckkammerabschnitt | | |
| 23 | Hydro- Dehnspannfutter | | |
| 24 | innenliegende Spannfläche | | |
| 25 | Aufnahmebohrung | | |
| 26 | Axialspanneinrichtung | | |
| 27 | stirnseitige Spannfläche | | |
| 28 | Positioniervorsprung | | |

## Patentansprüche

1. Hydraulische Dehnspanneinrichtung (1), insbesondere zum Fixieren eines Werkstücks oder eines Werkzeugs an einer Werkzeugmaschine, mit
einem eine Längsachse (X) definierenden Grundkörper (2), an dem ein Spannbereich (3) ausgebildet ist, wobei der Spannbereich (3)
eine Aufnahme (4) mit einer außenliegenden Spannfläche (5) für ein Bauteil und
eine mit einem Hydraulikmittel beaufschlagbare und radial innerhalb der Aufnahme (4) angeordnete Druckkammeranordnung (7) umfasst,
wobei zwischen der Aufnahme (4) und der Druckkammeranordnung (7) eine dünne Wandung (10) derart ausgebildet ist, dass sie durch Druckerhöhung in der Druckkammeranordnung (7) elastisch radial nach außen verformbar ist, um eine auf die Aufnahme (4) geschobenes Bauteil von innen kraftschlüssig zu fixieren,
**dadurch gekennzeichnet, dass** radial innerhalb der Druckkammeranordnung (7) mindestens eine Hohlkammer (19) ausgebildet ist, die von der Druckkammeranordnung (7) durch eine Ausgleichsmembran (20) getrennt ist, so dass sich die Ausgleichmembran (20) in die Hohlkammer (19) hinein verformen kann, wenn sich bei einem gespannten Bauteil die Temperatur des Hydraulikmittels erhöht und dieses expandiert.

2. Hydraulische Dehnspanneinrichtung (23), insbesondere zum Fixieren eines Werkstücks oder eines Werkzeugs an einer Werkzeugmaschine, mit
einem eine Längsachse (X) definierenden Grundkörper (2), an dem ein Spannbereich (3) ausgebildet ist, wobei der Spannbereich (3)
eine Aufnahme (4) mit einer innenliegenden Spannfläche (24) für ein Bauteil und
eine mit einem Hydraulikmittel beaufschlagbare und radial außerhalb der Aufnahme (4) angeordnete Druckkammeranordnung (7) umfasst,
wobei zwischen der Aufnahme (4) und der Druckkammeranordnung (7) eine dünne Wandung (10) derart ausgebildet ist, dass sie durch Druckerhöhung in der Druckkammeranordnung (7) elastisch radial nach innen verformbar ist, um einen in die Aufnahme (4) eingesetztes Bauteil von außen kraftschlüssig zu fixieren,
**dadurch gekennzeichnet, dass** radial außerhalb der Druckkammeranordnung (7) mindestens eine Hohlkammer (19) ausgebildet ist, die von der Druckkammeranordnung (7) durch eine Ausgleichsmembran (20) getrennt ist, so dass sich die Ausgleichmembran (20) in die Hohlkammer (19) hinein verformen kann, wenn sich bei einem gespannten Bauteil die Temperatur des Hydraulikmittels erhöht und dieses expandiert.

3. Hydraulische Dehnspanneinrichtung (1, 23) nach einem der vorherigen Ansprüche, **dadurch gekennzeichnet, dass** die Ausgleichsmembran (20) stärker ausgebildet ist als die dünne Wandung (10), wobei bevorzugt
die Ausgleichsmembran (20) eine Dicke von mindestens 110%, insbesondere von mindestens 120%, und/oder von höchstens 300%, insbesondere von höchstens 200%, bevorzugt von 150% +/- 10% der Dicke der dünnen Wandung (10) aufweist.

4. Hydraulische Dehnspanneinrichtung (1, 23) nach einem der vorherigen Ansprüche, **dadurch gekennzeichnet, dass** die Druckkammeranordnung (7) eine ringförmig umlaufende Druckkammer (8) umfasst und/oder
dass die Druckkammeranordnung (7) über den Umfang verteilt mehrere, insbesondere genau drei Druckkammerabschnitte (21) aufweist, welche über einen Verbindungskanal fluidisch miteinander verbunden sind.

5. Hydraulische Dehnspanneinrichtung (1, 23) nach Anspruch 4, **dadurch gekennzeichnet, dass** eine ringförmig umlaufende Hohlkammer (19) vorgesehen ist oder

6. Hydraulische Dehnspanneinrichtung (1, 23) nach Anspruch 4, **dadurch gekennzeichnet, dass** über den Umfang verteilt mehrere, insbesondere genau drei Hohlkammern vorgesehen sind, wobei insbesondere
korrespondierend zu den Druckkammerabschnitten (21) die gleiche Anzahl an Hohlkammern (19) vorgesehen sind, wobei sich die Druckkammerabschnitte (21) und die dazu korrespondierenden Hohlkammern (19) über die gleichen Umfangswinkel um die Längsachse erstrecken.

7. Hydraulische Dehnspanneinrichtung (1, 23) nach einem der Ansprüche 4 bis 6, **dadurch gekennzeichnet, dass** sich jede Hohlkammer (19) über eine axiale Länge von mindestens 60%, insbesondere mindestens 80%, bevorzugt mindestens 90% der Länge der Druckkammeranordnung (7) und/oder über eine axiale Länge von höchstens 140%, insbesondere höchstens 120%, bevorzugt höchstens 110% der Länge der Druckkammeranordnung (7) erstreckt.

8. Hydraulische Dehnspanneinrichtung (1, 23) nach einem der vorherigen Ansprüche, **dadurch gekennzeichnet, dass** die Druckkammeranordnung (7) zwei axial voneinander beabstandete und ringförmig umlaufende Druckkammerabschnitte (22) umfasst, welche bevorzugt über einen Verbindungskanal fluidisch miteinander verbunden sind, wobei bevorzugt
eine ringförmig umlaufende Hohlkammer (19) vorgesehen ist, die sich zumindest teilweise axial über die beiden Druckkammerabschnitte (22) erstreckt.

9. Hydraulische Dehnspanneinrichtung (1, 23) nach einem der vorherigen Ansprüche, **dadurch gekennzeichnet, dass** die Hohlkammer (19) in ihren axialen Endbereichen abgerundet ausgebildet ist und/oder
dass die Druckkammeranordnung (7) in ihren axialen Endbereichen (9) einen gegenüber einem mittleren Bereich vergrößerten Querschnitt aufweist.

10. Hydraulische Dehnspanneinrichtung (26), insbesondere zum Fixieren eines Werkstücks oder eines Werkzeugs an einer Werkzeugmaschine, mit
einem eine Längsachse (X) definierenden Grundkörper (2), an dem ein Spannbereich (3) ausgebildet ist, wobei der Spannbereich (3)
eine Aufnahme (4) mit einer vorderen, stirnseitigen Spannfläche (27) für ein Bauteil und
eine mit einem Hydraulikmittel beaufschlagbare Druckkammeranordnung (7) umfasst, welche axial hinter der Aufnahme (4) ausgebildet ist,
wobei zwischen der Aufnahme (4) und der Druckkammeranordnung (7) eine dünne Wandung (10) derart ausgebildet ist, dass sie durch Druckerhöhung in der Druckkammeranordnung (7) elastisch nach vorne verformbar ist, um ein auf die Aufnahme (4) aufgesetztes Bauteil axial zu spannen,
**dadurch gekennzeichnet, dass** axial hinter der Druckkammeranordnung (7) eine Hohlkammer (19) ausgebildet ist, die von der Druckkammeranordnung (7) durch eine Ausgleichsmembran (20) getrennt wird, so dass sich die Ausgleichmembran (20) in die Hohlkammer (19) hinein verformen kann, wenn sich bei einem gespannten Bauteil die Temperatur des Hydraulikmittels erhöht und dieses expandiert.

11. Hydraulische Dehnspanneinrichtung (1, 23, 26) nach einem der vorherigen Ansprüche, **dadurch gekennzeichnet, dass** die Druckkammeranordnung (7) in einen Hydraulikmittelzuführkanal (11) mündet, der an seiner von der Druckkammeranordnung (7) fernen Seite durch eine Spannschraube nach außen verschlossen ist.

12. Hydraulische Dehnspanneinrichtung (1, 23, 26) nach Anspruch 4, **dadurch gekennzeichnet, dass** die Spannschraube mit einem im Hydraulikmittelzuführkanal (11) verschiebbar angeordneten Spannkolben wirkverbunden oder einteilig mit diesem ausgebildet ist, so dass der Spannkolben durch Drehen der Spannschraube unter Erhöhung des Drucks in der Druckkammeranordnung (7) verschiebbar ist.

13. Hydraulische Dehnspanneinrichtung (1, 23, 26) nach Anspruch 12 und Anspruch 1, **dadurch gekennzeichnet, dass** der Hydraulikmittelzuführkanal (11) eine zentrale Spannbohrung (14) umfasst, in welcher der Spannkolben verschiebbar gelagert ist.

14. Hydraulische Dehnspanneinrichtung (1, 23, 26) nach einem der Ansprüche 4 bis 13, **dadurch gekennzeichnet, dass** die Spannschraube in einem stirnseitig am Grundkörper (2) befestigten Aufsatzstück (16) untergebracht ist, wobei das Aufsatzstück (16) insbesondere in den Grundkörper (2) eingeschraubt ist, und/oder
dass der Hydraulikmittelzuführkanal (11) mit mindestens einer Entlüftungsöffnung (12) fluidverbunden ist, wobei jede Entlüftungsöffnung (12) bevorzugt mit einem Entlüftungsventil (13) versehen ist.

15. Hydraulische Dehnspanneinrichtung (1, 23, 26) nach einem der vorherigen Ansprüche, **dadurch gekennzeichnet, dass** die Hohlkammer (19) als vollständig geschlossener Hohlraum im Grundkörper (2) ausgebildet ist, oder dass die Hohlkammer über einen Verbindungskanal mit der Umgebung verbunden ist, und/oder
dass der Grundkörper (2) zumindest im Spannbereich (3) einteilig ausgebildet ist, wobei - insbesondere -
der Grundkörper (2) zumindest teilweise mittels eines generativen Fertigungsverfahrens, insbesondere mittels selektiven Lasersinterns hergestellt ist.
